# EUROPEAN PATENT APPLICATION

(11) **EP 3 006 674 A2**
(43) Date of publication of application: **13.04.2016**
(21) Application number: 15187596.0
(22) Date of filing: 30.09.2015
(51) Int. Cl.: F01D 5/26

(54) **GAS TURBINE ENGINE AIRFOIL MISTUNING**

(30) Priority: 01.10.2014 US 201462058297 P
(71) Applicant: United Technologies Corporation, Hartford, CT 06101 (US)
(72) Inventor: HANRAHAN, Paul R., Farmington, CT Connecticut 06032-3425 (US)
(74) Representative: Leckey, David Herbert

(57) **Abstract**

A stage (60) for a gas turbine engine (20) includes a circumferential airfoil array (80) that provides a total airfoil count for the stage and that includes first (A1, A2, A3) and second (B1, B2, B3) sets of airfoils. The airfoil array (80) has first (82), second (84), third (86) and fourth (88) arcuate regions. The first (82) and second (84) arcuate regions are arranged opposite one another and the third (86) and fourth (88) arcuate regions are arranged opposite one another. The first set of airfoils (A1, A2, A3) includes a different vibrational frequency than the second set of airfoils (B1, B2, B3). The first set of airfoils (A1, A2, A3) has first primary (A1), first secondary (A2) and first tertiary (A3) airfoil groups. The second set of airfoils (B1, B2, B3) has second primary (B1), second secondary (B2) and second tertiary (B3) airfoil groups. The first primary airfoil group (A1) and second primary airfoil group (B1) are respectively arranged in the first (82) and second (84) arcuate regions. The first secondary airfoil group (A2) and second secondary airfoil group (B2) are arranged in the third arcuate region (86). The first tertiary airfoil group (A3) and the second tertiary airfoil group (B3) are arranged in the fourth arcuate region (88). The first (82) and second (84) arcuate regions provide greater than 50% of the total airfoil count.

## Description

### BACKGROUND

This disclosure relates to an airfoil array for a gas turbine engine.

A gas turbine engine typically includes a fan section, a compressor section, a combustor section and a turbine section. Air entering the compressor section is compressed and delivered into the combustor section where it is mixed with fuel and ignited to generate a high-speed exhaust gas flow. The high-speed exhaust gas flow expands through the turbine section to drive the compressor and the fan section. The compressor section typically includes low and high pressure compressors, and the turbine section includes low and high pressure turbines.

The compressor and turbine section includes circumferential arrangements of fixed and rotating stages. Structural vibratory coupling between adjacent airfoils can occur during engine operation. For rotating stages of the engine, blade mistuning has been used in which there are two sets of blades are arranged in circumferentially alternating relationship to provide an even numbered blade array. One set of blades has a different characteristic than the other set of blades to provide two different resonant frequencies. For fixed stages, vanes have been mistuned by providing different sets of vanes in adjacent quadrants of the array.

### SUMMARY

In one exemplary embodiment, a stage for a gas turbine engine includes a circumferential airfoil array that provides a total airfoil count for the stage and that includes first and second sets of airfoils. The airfoil array has first, second, third and fourth arcuate regions. The first and second arcuate regions are arranged opposite one another and the third and fourth arcuate regions are arranged opposite one another. The first set of airfoils includes a different vibrational frequency than the second set of airfoils. The first set of airfoils has first primary, first secondary and first tertiary airfoil groups. The second set of airfoils has second primary, second secondary and second tertiary airfoil groups. The first primary airfoil group and second primary airfoil group are respectively arranged in the first and second arcuate regions. The first secondary airfoil group and second secondary airfoil group are arranged in the third arcuate region. The first tertiary airfoil group and the second tertiary airfoil group are arranged in the fourth arcuate region. The first and second arcuate regions provide greater than 50% of the total airfoil count.

In a further embodiment of the above, the array is a stator vane stage and the airfoils are vanes.

In a further embodiment of any of the above, the stator vane stage is arranged in one of a compressor section and a turbine section of the gas turbine engine.

In a further embodiment of any of the above, the vanes are integrated with an outer platform and are cantilevered.

In a further embodiment of any of the above, the first set of airfoils has a different characteristic than the second set of airfoils to provide the different vibrational frequency.

In a further embodiment of any of the above, the different characteristic is at least one of an airfoil thickness, an airfoil shape, an airfoil spacing, a platform endwall shape, an airfoil material and an airfoil weight.

In a further embodiment of any of the above, the different characteristic is the airfoil spacing.

In a further embodiment of any of the above, the first and second sets of airfoils each have an airfoil spacing based upon a simulated stage airfoil count within +/- 10 airfoils of the total airfoil count.

In a further embodiment of any of the above, the first set of airfoils has an airfoil spacing based within +8 airfoils of the total airfoil count. The second set of airfoils has an airfoil spacing based within -8 airfoils of the total airfoil count.

In a further embodiment of any of the above, the first primary group, the first secondary group, the first tertiary airfoil group, the second primary group, the second secondary group and the second tertiary airfoil group each include multiple airfoils.

In a further embodiment of any of the above, the multiple airfoils are arranged in clusters.

In a further embodiment of any of the above, the first secondary group, the first tertiary airfoil group, the second secondary group and the second tertiary airfoil group each include the same number of airfoils as one another.

In a further embodiment of any of the above, the first primary group and the second primary group each include a different number of airfoils than one another.

In a further embodiment of any of the above, the first primary group and the second primary group each include the same number of airfoils as one another.

In a further embodiment of any of the above, the total airfoil count is provided only by the first and second sets of airfoils.

In a further embodiment of any of the above, the airfoil array includes only the first, second, third and fourth arcuate regions.

In a further embodiment of any of the above, a sum of the first secondary airfoil group and second secondary airfoil group arranged in the third arcuate region provides less than 25% of the total airfoil count. A sum of the first tertiary airfoil group and the second tertiary airfoil group provides less than 25% of the total airfoil count.

In a further embodiment of any of the above, the first and second arcuate regions provide greater than 75% of the total airfoil count.

In a further embodiment of any of the above, some of the airfoil groups contain a third or fourth set of airfoils within them.

In another exemplary embodiment, a stage for a gas turbine engine includes
a circumferential airfoil array that provides a total airfoil count for the stage and that includes first and second sets of airfoils. The airfoil array has first, second, third and fourth arcuate regions. The first and second arcuate regions are arranged opposite one another. The third and fourth arcuate regions are arranged opposite one another. The first set of airfoils includes a different vibrational frequency than the second set of airfoils. The first set of airfoils has first primary, first secondary and first tertiary airfoil groups. The second set of airfoils has second primary, second secondary and second tertiary airfoil groups. The first primary airfoil group and second primary airfoil group are respectively arranged in the first and second arcuate regions. The first secondary airfoil group and second secondary airfoil group are arranged in the third arcuate region. The first tertiary airfoil group and the second tertiary airfoil group are arranged in the fourth arcuate region. The first and second arcuate regions provide greater than 50% of the total airfoil count. The first set of airfoils has a different characteristic than the second set of airfoils to provide the different vibrational frequency. The different characteristic is an airfoil spacing where the first and second sets of airfoils each have an airfoil spacing based upon a simulated stage airfoil count within +/- 10 airfoils of the total airfoil count. The first primary group, the first secondary group, the first tertiary airfoil group, the second primary group, the second secondary group and the second tertiary airfoil group each include multiple airfoils. The first secondary group, the first tertiary airfoil group, the second secondary group and the second tertiary airfoil group each include the same number of airfoils as one another.

In a further embodiment of the above, the array is a stator vane stage and the airfoils are vanes. The stator vane stage is arranged in one of a compressor section and a turbine section of the gas turbine engine.

### BRIEF DESCRIPTION OF THE DRAWINGS

The disclosure can be further understood by reference to the following detailed description when considered in connection with the accompanying drawings wherein:
Figure 1 schematically illustrates a gas turbine engine embodiment.
Figure 2A is a schematic view through an engine section including a fixed stage and a rotating stage.
Figure 2B illustrates airfoil clusters within a stage.
Figure 3 is a perspective view of a stage having first and second airfoils arranged in circumferentially alternating relationships with one another.
Figure 4 is another example arrangement of airfoils.

The embodiments, examples and alternatives of the preceding paragraphs, the claims, or the following description and drawings, including any of their various aspects or respective individual features, may be taken independently or in any combination. Features described in connection with one embodiment are applicable to all embodiments, unless such features are incompatible.

### DETAILED DESCRIPTION

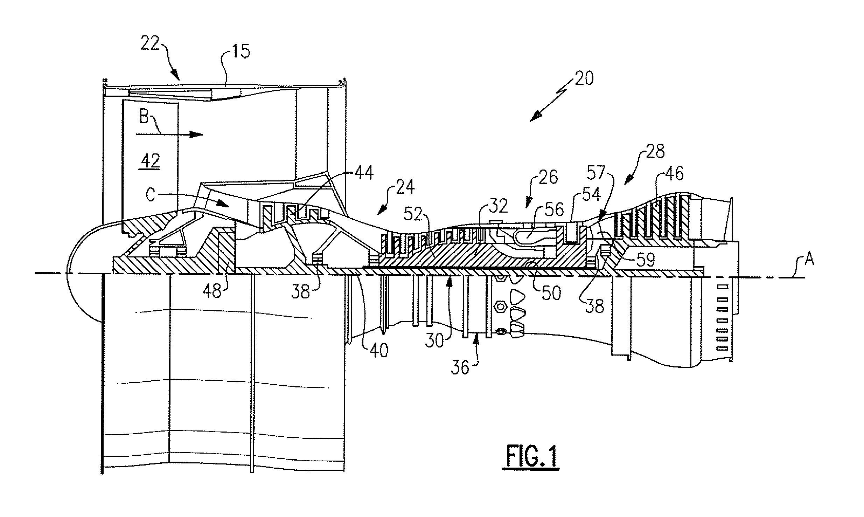

Figure 1 schematically illustrates a gas turbine engine 20. The gas turbine engine 20 is disclosed herein as a two-spool turbofan that generally incorporates a fan section 22, a compressor section 24, a combustor section 26 and a turbine section 28. Alternative engines might include an augmenter section (not shown) among other systems or features. The fan section 22 drives air along a bypass flow path B in a bypass duct defined within a nacelle 15, while the compressor section 24 drives air along a core flow path C for compression and communication into the combustor section 26 then expansion through the turbine section 28. Although depicted as a two-spool turbofan gas turbine engine in the disclosed non-limiting embodiment, it should be understood that the concepts described herein are not limited to use with two-spool turbofans as the teachings may be applied to other types of turbine engines including three-spool architectures.

The exemplary engine 20 generally includes a low speed spool 30 and a high speed spool 32 mounted for rotation about an engine central longitudinal axis X relative to an engine static structure 36 via several bearing systems 38. It should be understood that various bearing systems 38 at various locations may alternatively or additionally be provided, and the location of bearing systems 38 may be varied as appropriate to the application.

The low speed spool 30 generally includes an inner shaft 40 that interconnects a fan 42, a first (or low) pressure compressor 44 and a first (or low) pressure turbine 46. The inner shaft 40 is connected to the fan 42 through a speed change mechanism, which in exemplary gas turbine engine 20 is illustrated as a geared architecture 48 to drive the fan 42 at a lower speed than the low speed spool 30. The high speed spool 32 includes an outer shaft 50 that interconnects a second (or high) pressure compressor 52 and a second (or high) pressure turbine 54. A combustor 56 is arranged in exemplary gas turbine 20 between the high pressure compressor 52 and the high pressure turbine 54. A mid-turbine frame 57 of the engine static structure 36 is arranged generally between the high pressure turbine 54 and the low pressure turbine 46. The mid-turbine frame 57 further supports bearing systems 38 in the turbine section 28. The inner shaft 40 and the outer shaft 50 are concentric and rotate via bearing systems 38 about the engine central longitudinal axis X which is collinear with their longitudinal axes.

The core airflow is compressed by the low pressure compressor 44 then the high pressure compressor 52, mixed and burned with fuel in the combustor 56, then expanded over the high pressure turbine 54 and low pressure turbine 46. The mid-turbine frame 57 includes airfoils 59 which are in the core airflow path C. The turbines 46, 54 rotationally drive the respective low speed spool 30 and high speed spool 32 in response to the expansion. It will be appreciated that each of the positions of the fan section 22, compressor section 24, combustor section 26, turbine section 28, and fan drive gear system 48 may be varied. For example, gear system 48 may be located aft of combustor section 26 or even aft of turbine section 28, and fan section 22 may be positioned forward or aft of the location of gear system 48.

The engine 20 in one example is a high-bypass geared aircraft engine. In a further example, the engine 20 bypass ratio is greater than about six (6), with an example embodiment being greater than about ten (10), the geared architecture 48 is an epicyclic gear train, such as a planetary gear system or other gear system, with a gear reduction ratio of greater than about 2.3 and the low pressure turbine 46 has a pressure ratio that is greater than about five. In one disclosed embodiment, the engine 20 bypass ratio is greater than about ten (10:1), the fan diameter is significantly larger than that of the low pressure compressor 44, and the low pressure turbine 46 has a pressure ratio that is greater than about five (5:1). Low pressure turbine 46 pressure ratio is pressure measured prior to inlet of low pressure turbine 46 as related to the pressure at the outlet of the low pressure turbine 46 prior to an exhaust nozzle. The geared architecture 48 may be an epicycle gear train, such as a planetary gear system or other gear system, with a gear reduction ratio of greater than about 2.3:1. It should be understood, however, that the above parameters are only exemplary of one embodiment of a geared architecture engine and that the present invention is applicable to other gas turbine engines including direct drive turbofans.

A significant amount of thrust is provided by the bypass flow B due to the high bypass ratio. The fan section 22 of the engine 20 is designed for a particular flight condition -- typically cruise at about 0.8 Mach and about 35,000 feet (10,668 metres). The flight condition of 0.8 Mach and 35,000 ft (10,668 metres), with the engine at its best fuel consumption - also known as "bucket cruise Thrust Specific Fuel Consumption ('TSFC')" - is the industry standard parameter of lbm of fuel being burned divided by lbf of thrust the engine produces at that minimum point. "Low fan pressure ratio" is the pressure ratio across the fan blade alone, without a Fan Exit Guide Vane ("FEGV") system. The low fan pressure ratio as disclosed herein according to one non-limiting embodiment is less than about 1.45. "Low corrected fan tip speed" is the actual fan tip speed in ft/sec divided by an industry standard temperature correction of [(Tram °R) / (518.7 °R)]^{0.5}. The "Low corrected fan tip speed" as disclosed herein according to one non-limiting embodiment is less than about 1150 ft / second (350.5 m / second).

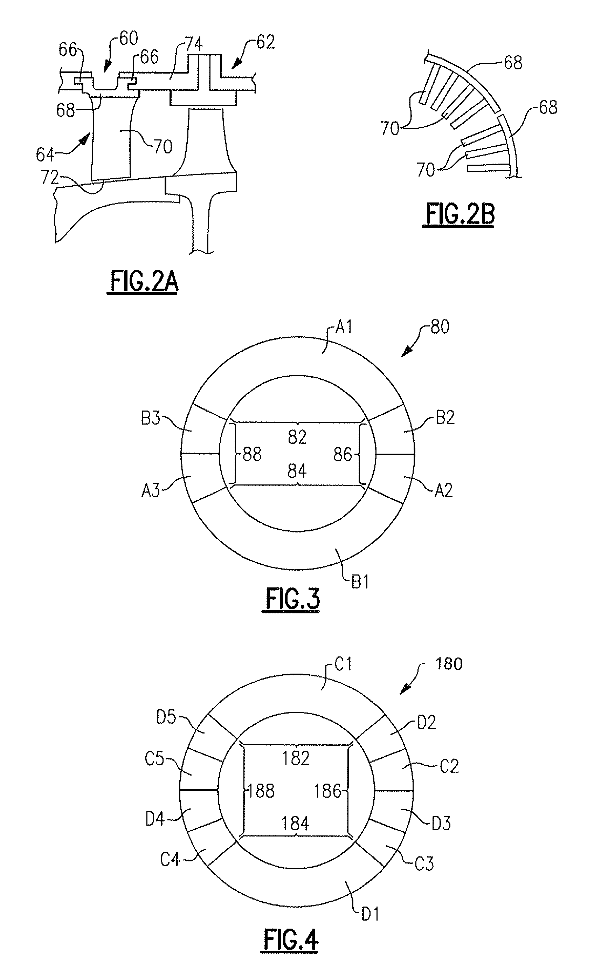

Referring to Figure 2A, a portion of an engine section is shown, for example, a turbine section. It should be understood, however, that disclosed section also may be provided in a compressor section.

The section includes a fixed stage 60 that provides a circumferential array of vanes 64 arranged axially adjacent to a rotating stage 62. In the example, the vane 64 includes an outer diameter portion 68 having hooks 66 that support the array of vanes 64 with respect to a case structure 74. An airfoil 70 is integral with and extends radially from a platform of the outer diameter portion 68. In the examples that are illustrated, the vanes 64 are of the cantilevered type in which an inner diameter portion 72 of the airfoil 70 is unsupported. It should be understood that the disclosed vane arrangement could be used for vane structures having a platform at the inner diameter portion of the airfoil. The array of stator vanes may be provided as singlets, doublets, a full ring, ring halves or other multiples, as shown in Figure 2B.

Although the example stage is discussed in terms of stator vanes, the disclosed mistuning configuration can be used for other arrays of airfoils, such as blades in a rotating stage. The circumferential airfoil array 80 provides a total airfoil count for the stage and that includes first and second sets of airfoils "A" and "B," as shown in Figure 3. In the example, the first set of airfoils "A" has first primary, first secondary and first tertiary airfoil groups A1, A2, A3. The second set of airfoils "B" has second primary, second secondary and second tertiary airfoil groups B1, B2, B3. The terms "first," "second," "primary," "secondary" and "tertiary" are not intended to connote importance or priority, but are used for identification purposes only.

The first set of airfoils "A" has a different characteristic than the second set of airfoils "B" to provide a different vibrational frequency. The different characteristic is at least one of an airfoil thickness, an airfoil shape, an airfoil spacing, a platform endwall shape, an airfoil material and an airfoil weight. In the example, the different characteristic is the airfoil spacing.

In one example shown in Table 1, the stage has a total airfoil count of 42. The first and second sets of airfoils "A," "B" each have an airfoil spacing based upon a simulated stage airfoil count within +/- 10 airfoils of the total airfoil count, in the example, 42. For example, the first set of airfoils "A" has an airfoil spacing based within +8 airfoils of the total airfoil count, for example, 46.70. The second set of airfoils "B" has an airfoil spacing based within -8 airfoils of the total airfoil count, for example, 38.16. As can be appreciated from the examples, the simulated airfoil count may or may not be an integer. So, within the groupings of the first set of airfoils "A," the vanes are more tightly packed together than in the grouping of the second set of airfoils "B," which provides different airfoil spacing and mistuning within the stage.

The airfoil array 80 has first, second, third and fourth arcuate regions, 82, 84, 86, 88, respectively. The first and second arcuate regions 82, 84 are arranged opposite one another, and the third and fourth arcuate regions 86, 88 are arranged opposite one another.

The first primary group A1, the first secondary group A2, the first tertiary airfoil group A3, the second primary group B1, the second secondary group B2 and the second tertiary airfoil group B3 each include multiple airfoils. The multiple airfoils are arranged in clusters. The first primary airfoil group A1 and second primary airfoil group B1 are respectively arranged in the first and second arcuate regions 82, 84. The first secondary airfoil group A2 and second secondary airfoil group B2 are arranged in the third arcuate region 86. The first tertiary airfoil group A3 and the second tertiary airfoil group B3 are arranged in the fourth arcuate region 88.

The first and second arcuate regions 82, 84 and the first and second airfoils within those regions provide greater than 50% of the total airfoil count. In one example, the first and second arcuate regions and its airfoils provide greater than 75% of the total airfoil count. A sum of the first secondary airfoil group A2 and the second secondary airfoil group B2 arranged in the third arcuate region 86 provides less than 25% of the total airfoil count. Similarly, a sum of the first tertiary airfoil group A3 and the second tertiary airfoil group B3 provides less than 25% of the total airfoil count. Several example stages are shown in Table 1 below.

**TABLE 1**

| | Example 1 | Example 2 | Example 3 |
|---|---|---|---|
| #of airfoils | 42 | 51 | 48 |
| Spacing for A# of airfoils | 46.70 | 56.85 | 54.12 |
| Spacing for B# of airfoils | 38.16 | 46.73 | 44.41 |
| Airfoil count A1 | 15 | 18 | 14 |
| Airfoil count B1 | 15 | 21 | 21 |
| Airfoil count A2 | 3 | 3 | 3 |
| Airfoil count B2 | 3 | 3 | 4 |
| Airfoil count A3 | 3 | 3 | 3 |
| Airfoil count B3 | 3 | 3 | 3 |

As can be seen in table above, the number of airfoils between the groups may be the same or different.

In the examples, the total airfoil count is provided only by the first and second sets of airfoils "A," "B," and the airfoil array 80 includes only the first, second, third and fourth arcuate regions 82, 84, 86, 88. More than two different airfoils may be used and more than four arcuate regions may be provided.

In another example shown in Figure 4, the airfoil array 180 includes first, second, third and fourth arcuate regions 182, 184, 186, 188. Some of the first set of vanes C1 are arranged in the first arcuate region 182, and some of the second set of vanes D1 are arranged in the second arcuate region 184. Instead of pairs of vane clusters in the third and fourth arcuate regions 186, 188, additional clusters are provided (e.g., C2, D2, C3, D3 in the third arcuate region 186; C4, D4, C5, D5 in the fourth arcuate region 188).

The first and second sets of airfoils "A," "B" have different vibration frequencies than one another to mistune the array of vanes and reduce the structural and aerodynamic coupling between adjacent vanes. As a result, the airfoil resonant vibration response, the vibration response after engine compressor stall from aerodynamic separation induced vibration, and the airfoil aero-elastic flutter vibration response all may be reduced. An array of non-mistuned airfoils, because they all are of the same shape and spacing, reinforce a single vibratory frequency. Mistuning an array disperses vibration reinforcement among multiple frequencies; each at a reduced amount. For instance, Table 2 shows that the array from Example 1 in Table 1 disperses reinforcement among multiple frequencies. So, in a stage having 42 equally spaced airfoils, a multiple of engine RPM coinciding with this number of airfoils, i.e., 42, would tend to excite an adjacent blade to a high degree. The disclosed mistuning arrangement results in a significant vibration reduction at this engine RPM multiple, for example, up to 35%. This is much greater than current mistuning method.

**TABLE 2**

| | | | | | | | | | | | | | |
|---|---|---|---|---|---|---|---|---|---|---|---|---|---|
| Multiple of engine RPM | 37 | 38 | 39 | 40 | 41 | 42 | 43 | 44 | 45 | 46 | 47 | 48 | 49 |
| Max vibration reinforce ment | 0.30 | 0.23 | 0.29 | 0.35 | 0.13 | *0.35* | 0.19 | 0.25 | 0.29 | 0.20 | 0.34 | *0.35* | 0.06 |

It should also be understood that although a particular component arrangement is disclosed in the illustrated embodiment, other arrangements will benefit herefrom. Although particular step sequences are shown, described, and claimed, it should be understood that steps may be performed in any order, separated or combined unless otherwise indicated and will still benefit from the present invention.

Although the different examples have specific components shown in the illustrations, embodiments of this invention are not limited to those particular combinations. It is possible to use some of the components or features from one of the examples in combination with features or components from another one of the examples.

Although an example embodiment has been disclosed, a worker of ordinary skill in this art would recognize that certain modifications would come within the scope of the claims. For that reason, the following claims should be studied to determine their true scope and content.

## Claims

1. A stage (60) for a gas turbine engine (20) comprising:
a circumferential airfoil array (80) providing a total airfoil count for the stage (60) and that includes first (A1, A2, A3) and second (B1, B2, B3) sets of airfoils, the airfoil array (80) has first (82), second (84), third (86) and fourth (88) arcuate regions, the first (82) and second (84) arcuate regions arranged opposite one another, and the third (86) and fourth (88) arcuate regions arranged opposite one another, the first set of airfoils (A1, A2, A3) includes a different vibrational frequency than the second set of airfoils (B1, B2, B3), the first set of airfoils (A1, A2, A3) has first primary (A1), first secondary (A2) and first tertiary (A3) airfoil groups, the second set of airfoils has second primary (B1), second secondary (B2) and second tertiary (B3) airfoil groups, the first primary airfoil group (A1) and second primary airfoil group (B1) respectively arranged in the first (82) and second (84) arcuate regions, the first secondary airfoil group (A2) and second secondary airfoil group (B2) arranged in the third arcuate region (86), and the first tertiary airfoil group (A3) and the second tertiary airfoil group (B3) arranged in the fourth arcuate region (88), the first (82) and second (84) arcuate regions provide greater than 50% of the total airfoil count.

2. The stage (60) according to claim 1, wherein the array (80) is a stator vane stage, and the airfoils are vanes (64), wherein, optionally, the stator vane stage is arranged in one of a compressor section (24) and a turbine section (28) of the gas turbine engine (20), and/or wherein, optionally, the vanes (64) are integrated with an outer platform (68) and are cantilevered.

3. The stage (60) according to claim 1 or 2, wherein the first set of airfoils (A1, A2, A3) has a different characteristic than the second set of airfoils (B1, B2, B3) to provide the different vibrational frequency, and wherein, optionally, the different characteristic is at least one of an airfoil thickness, an airfoil shape, an airfoil spacing, a platform endwall shape, an airfoil material and an airfoil weight.

4. The stage (60) according to claim 3, wherein the different characteristic is the airfoil spacing and wherein, optionally, the first (A1, A2, A3) and second (B1, B2, B3) sets of airfoils each have an airfoil spacing based upon a simulated stage airfoil count within +/- 10 airfoils of the total airfoil count.

5. The stage (60) according to any preceding claim, wherein the first primary group (A1), the first secondary group (A2), the first tertiary airfoil group (A3), the second primary group (B1), the second secondary group (B2) and the second tertiary airfoil group (B3) each include multiple airfoils, and wherein, optionally, the multiple airfoils are arranged in clusters.

6. The stage (60) according to any preceding claim, wherein the first secondary group (A2), the first tertiary airfoil group (A3), the second secondary group (B2) and the second tertiary airfoil group (B3) each include the same number of airfoils as one another.

7. The stage (60) according to any preceding claim, wherein the first primary group (A1) and the second primary group (B1) each include a different number of airfoils than one another.

8. The stage (60) according to any of claims 1 to 6, wherein the first primary group (A1) and the second primary group (B1) each include the same number of airfoils as one another.

9. The stage (60) according to any preceding claim, wherein the total airfoil count is provided only by the first (A1, A2, A3) and second (B1, B2, B3) sets of airfoils.

10. The stage (60) according to any preceding claim, wherein the airfoil array (80) includes only the first (82), second (84), third (86) and fourth (88) arcuate regions.

11. The stage (60) according to any preceding claim, wherein a sum of the first secondary airfoil group (A2) and second secondary airfoil group (B2) arranged in the third arcuate region (86) provides less than 25% of the total airfoil count, and a sum of the first tertiary airfoil group (A3) and the second tertiary airfoil group (B3) provides less than 25% of the total airfoil count.

12. The stage (60) according to any preceding claim, wherein the first (A2) and second (B2) arcuate regions provide greater than 75% of the total airfoil count.

13. The stage (60) according to any preceding claim, where some of the airfoil groups contain a third or fourth set of airfoils within them.

14. A stage (60) for a gas turbine engine (20) comprising:
a circumferential airfoil array (80) providing a total airfoil count for the stage (60) and that includes first (A1, A2, A3) and second (B1, B2, B3) sets of airfoils, the airfoil array (80) has first (82), second (84), third (86) and fourth (88) arcuate regions, the first (82) and second (84) arcuate regions arranged opposite one another, and the third (86) and fourth (88) arcuate regions arranged opposite one another, the first set of airfoils (A1, A2, A3) includes a different vibrational frequency than the second set of airfoils (B1, B2, B3), the first set of airfoils (A1, A2, A3) has first primary (A1), first secondary (A2) and first tertiary (A3) airfoil groups, the second set of airfoils (B1, B2, B3) has second primary (B1), second secondary (B2) and second tertiary (B3) airfoil groups, the first primary airfoil group and second primary airfoil group (B1) respectively arranged in the first (82) and second (84) arcuate regions, the first secondary airfoil group (A2) and second secondary (B2) airfoil group arranged in the third arcuate region (86), and the first tertiary airfoil group (A3) and the second tertiary airfoil group (B3) arranged in the fourth arcuate region (88), the first (82) and second (84) arcuate regions provide greater than 50% of the total airfoil count;
wherein the first set of airfoils (A1, A2, A3) has a different characteristic than the second set of airfoils (B1, B2, B3) to provide the different vibrational frequency, the different characteristic is an airfoil spacing;
wherein the first (A1, A2, A3) and second (B1, B2, B3) sets of airfoils each have an airfoil spacing based upon a simulated stage airfoil count within +/- 10 airfoils of the total airfoil count;
wherein the first primary group (A1), the first secondary group (A2), the first tertiary airfoil group (A3), the second primary group (B1), the second secondary group (B2) and the second tertiary airfoil group (B3) each include multiple airfoils; and
wherein the first secondary group (A2), the first tertiary airfoil group (A3), the second secondary group (B2) and the second tertiary airfoil group (B3) each include the same number of airfoils as one another.

15. The stage (60) according to claim 14, wherein the array (80) is a stator vane stage, and the airfoils are vanes (64), the stator vane stage is arranged in one of a compressor section (24) and a turbine section (28) of the gas turbine engine (20).
